# EUROPEAN PATENT APPLICATION

(11) **EP 2 750 049 A1**
(43) Date of publication of application: **02.07.2014**
(21) Application number: 12782497.7
(22) Date of filing: 16.01.2012
(51) Int. Cl.: G06F 17/30

(54) **METHOD AND DEVICE FOR DISPLAYING PICTURE ON BROWSER OF USER TERMINAL AS REQUIRED**

(30) Priority: 25.10.2011 CN 201110327238
(71) Applicant: ZTE Corporation, Shenzhen, Guangdong 518057 (CN)
(72) Inventor: LI, Hongbo, Shenzhen Guangdong 518057 (CN); ZHOU, Yong, Shenzhen Guangdong 518057 (CN); SHOU, Yongyan, Shenzhen Guangdong 518057 (CN); YU, Feng, Shenzhen Guangdong 518057 (CN)
(74) Representative: Richter Werdermann Gerbaulet Hofmann
(86) International application number: PCT/CN2012/070416
(87) International publication number: WO 2012/152080

(57) **Abstract**

The disclosure discloses a method and device for displaying a picture on a browser of a User Equipment (UE) as required. The method includes that: when a UE accesses a WEB page through a browser, the browser parses a received HTML text, and typesets the WEB page in manner of a default picture according to a result of the parsing; a visual area of the WEB page is calculated and a control within the visual area is acquired; and after it is determined that the control within the visual area includes an image control and each image control within the visual area has obtained a corresponding picture, the visual area is drawn. With the disclosure, when a user only wants to view part of the area of a WEB page, time waiting for displaying of the WEB page and data-flow consumption are reduced by merely downloading any picture of the WEB page that is within the scope of a screen.

## Description

### TECHNICAL FIELD

The disclosure relates to the field of communication technology, and in particular to a method and device for displaying a picture on a browser of a User Equipment (UE) as required.

### BACKGROUND

A WEB page is an interface of a website designed for a screen of a Personal Computer (PC). When a WEB page is browsed by a mobile phone via an internet, only a part of an area within a screen area can generally be displayed on a screen at some point, whereas the rest of the screen area can be displayed only by moving a scroll bar.

During opening of a WEB page by a browser of a mobile phone, due to a limited speed of a wireless network, file downloading, especially picture downloading takes most of the time of a downloading process. Meanwhile, a WEB page is displayed on an existing mobile phone after one-time typesetting, that is, the mobile phone first downloads all Hypertext Markup Language (HTML) texts and pictures, forms a complete page through typesetting, and then calculates and displays a visual area of the page. Therefore, even if a user only wants to browse part of an area of the WEB page, the user also has to download pictures in the rest of the area, leading to prolonged downloading time and waste of data flow.

### SUMMARY

In view of the above analysis, the disclosure is intended to provide a method and device for displaying a picture on a browser of a UE as required, so as to solve the problem of prolonged downloading time and waste of data flow resulted from the approach of displaying after one-time typesetting adopted by a conventional browser.

A technical solution of the disclosure is implemented as follows.

A method for displaying a picture on a browser of a UE as required includes:
when a UE accesses a WEB page through a browser, the browser parses a received HTML text, and the browser typesets the WEB page in manner of a default picture according to a result of the parsing;
a visual area of the WEB page is calculated and a control within the visual area is acquired; and
the visual area is drawn after it is determined that the control within the visual area includes an image control and each image control within the visual area has obtained a corresponding picture.
In the above solution, the method may further include: after the WEB page is moved, the visual area of the WEB page is re-calculated and a control within the visual area is acquired; and
the visual area is drawn after it is determined that the control within the visual area includes an image control and each image control within the visual area has obtained a corresponding picture.

In the above solution, the step that the visual area is drawn after it is determined that the control within the visual area includes an image control and each image control within the visual area has obtained a corresponding picture may include:
it is determined whether there is an image control within the visual area; if it is determined that there is an image control within the visual area, a picture corresponding to the image control existing within the visual area is acquired, the picture is added into the image control corresponding to the picture, and the WEB page is re-typeset until each image control existing within the visual area has obtained a corresponding picture, and then the visual area is drawn; or if it is determined that there is no image control within the visual area, the visual area is drawn directly.

A device for displaying a picture on a browser of a UE as required includes: a parsing module, a calculating and acquiring module, and a determining and drawing module, wherein
the parsing module is configured to, when a UE accesses a WEB page through a browser, parse a received HTML text, and typeset the WEB page in manner of a default picture according to a result of the parsing;
the calculating and acquiring module is configured to calculate a visual area of the WEB page and acquire a control within the visual area; and
the determining and drawing module is configured to draw the visual area after determining that the control within the visual area includes an image control and that each image control within the visual area has obtained a corresponding picture.

In the above solution, the determining and drawing module may be specifically configured to: determine whether there is an image control within the visual area; if it is determined that there is an image control within the visual area, acquire a picture corresponding to the image control existing within the visual area, add the picture into the image control corresponding to the picture, and re-typeset the WEB page until each image control existing within the visual area has obtained a corresponding picture, and then draw the visual area; or if it is determined that there is no image control within the visual area, draw the visual area directly.

The disclosure has the following beneficial effect:
With the disclosure, when a user only wants to view part of the area of a WEB page, time waiting for displaying of the WEB page and data-flow consumption are reduced by merely downloading any picture of the WEB page that is within the scope of a screen.

Other features and advantages of the disclosure will be illustrated in the subsequent description, and will partly become obvious from the description or be understood by implementing the disclosure. A purpose and other advantages of the disclosure can be implemented and obtained via a structure pointed out particularly in the description, claims and drawings.

### BRIEF DESCRIPTION OF THE DRAWINGS

Fig. 1 is a flowchart of a method according to an embodiment of the disclosure; and
Fig. 2 is a structural diagram of a device according to an embodiment of the disclosure.

### DETAILED DESCRIPTION

Preferable embodiments of the disclosure are elaborated below with reference to the drawings. The drawings constitute a portion of the disclosure, and are used along with embodiments of the disclosure to elucidate a principle of the disclosure.

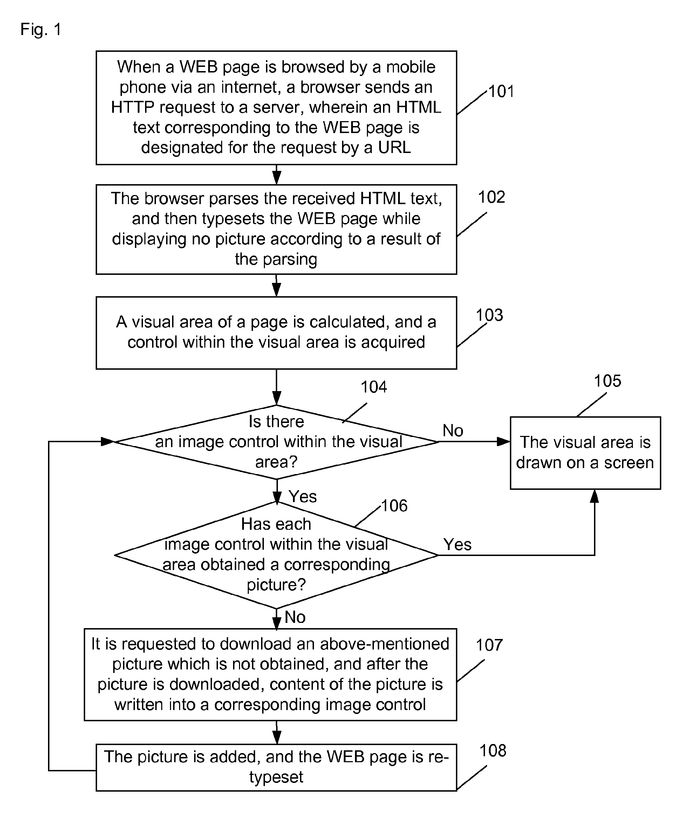

First, a method according to an embodiment of the disclosure is elaborated with reference to Fig. 1.

To help understand the embodiments of the disclosure, a principle of forming a WEB page in the prior art and a principle of displaying a WEB page on a mobile phone are briefly introduced here first.

The principle of forming a WEB page is as follows. A browser parses an HTML text to form a number of controls and containers. a control is used to display content, for example, a text control displays a text and an image control displays a picture. A control is placed in a container, and a position on which each control is displayed is calculated by a container, that is, a container is used to control typesetting. If the browser is to display a picture, the browser must acquire a Uniform Resource Locator (URL) of the picture from an image control, sends an HTTP request to the URL so as to download the picture, decodes the picture, and then writes decoded content into the image control. in case that the picture is not available yet, the image control displays a default picture (the default picture is a set special identifying picture required in typesetting, for example, the default picture may be a picture with a shape of "x", wherein data flow taken by such a picture is very small and can be ignored).

The principle of displaying a WEB page on a screen of a mobile phone is as follows. A browser sets absolute coordinates of a dot at the top left corner of the screen on the WEB page, and then calculates coordinates of a visual area according to a length and width of the screen. A page container compares coordinates of each control respectively with the coordinates of the visual area, and a control within the visual area is instructed to draw the control itself, such that content of the WEB page within the visual area is displayed before a user. After the browser receives information on a movement of the page, the browser will reset coordinates of the dot at the top left corner of the screen on the WEB page, and thereby re-calculate coordinates of the visual area.

Fig. 1 is a flowchart of a method according to an embodiment of the disclosure. The flow specifically includes the following steps.

Step 101: When a WEB page is browsed by a mobile phone via an internet, a browser sends an HTTP request to a server, wherein an HTML text corresponding to the WEB page is designated for the request by a URL.

Wherein, the HTML text includes a layout and text content of the whole WEB page but not picture content. Picture information is described by an img label in the HTML text, and a URL of a picture is designated in the img label, that is, the img label tells the browser where the picture can be acquired.

Step 102: The browser parses the received HTML text, and typesets the WEB page while displaying no picture according to a result of the parsing.

That is to say, the HTML text is parsed to form a number of controls and containers. A position where each control is displayed is calculated by a container. However, if a downloading identifier of an image control in the container is set as yet-to-be-downloaded, a WEB page generated after the typesetting does not include a picture corresponding to the image control.

Step 103: A visual area of a page is calculated, and a control within the visual area is acquired.

Step 104: It is determined whether a control within the visual area includes an image control, and if a control within the visual area includes an image control, Step 106 is executed; or if it is determined that no image control is included in the visual area, Step 105 is executed.

Step 105: The visual area is drawn on a screen, that is, the browser sets absolute coordinates of a dot at the top left corner of the screen on the WEB page, and then calculates coordinates of the visual area according to a length and width of the screen.

Step 106: It is determined whether each image control existing within the visual area has obtained a corresponding picture according to the downloading flag of the image control, and if at least one of said image control/controls has not acquired its corresponding picture, Step 107 is executed; or if each of said image control/controls has acquired a corresponding picture, Step 105 is executed.

Step 107: The browser requests to download an above-mentioned picture which is not obtained, and after the picture is downloaded, the browser writes content of the picture into a corresponding image control, and sets a downloading identifier of the corresponding image control as downloaded.

Step 108: The picture is added into the image control corresponding to the picture and the WEB page is re-typeset, and then Step 104 is executed until each image control within the visual area has acquired a corresponding picture.

A process of displaying a picture as required is illustrated below with a specific scene. The scene is that a user browses news about a Premier League on Sina.
1. The user fist inputs www.sina.com.cn on a browser of a mobile phone to open a home page of Sina. Displayed now on a screen of the mobile phone is a small area at the top left corner of the WEB page. At present, the browser has downloaded a picture within this small area, whereas no picture in lower and right portions of the WEB page is downloaded.
2. The user presses a right-arrow key to move the WEB page to the right, and finds a link for "Premier League" in a navigation area of the WEB page. During the process, some pictures at the upper portion of the WEB page enter the screen little by little, and are downloaded and displayed as the WEB page is being moved. However, a picture in the lower portion of the WEB page is still not downloaded.
3. The user clicks on the link for "Premier League", and the browser opens the home page of a Premier League plate. If the user only browses some important news about the Premier League on the upper portion of the WEB page, then no picture in the middle and lower portions of the WEB page will be downloaded throughout the browsing process of the user.

It can be seen from the above process that during a WEB-page browsing process, the user obtains the whole part that interests the user (content of the upper portion of the WEB page), while any picture of the WEB page that is of no interest to the user (a picture in the lower portion of the WEB page) is not downloaded. Therefore, a picture that the user does not need will not take up any downloading time and flow of the user.

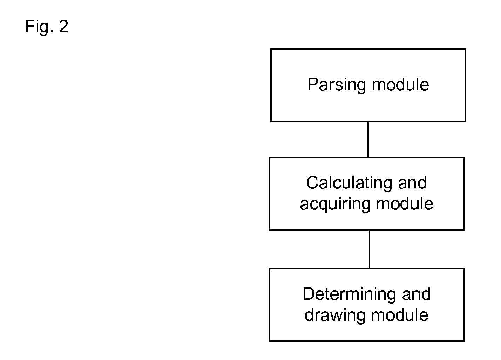

Next, a device according to an embodiment of the disclosure is elaborated with reference to Fig. 2.

Fig. 2 is a structural diagram of a device according to an embodiment of the disclosure. The device may specifically include: a parsing module, a calculating and acquiring module, and a determining and drawing module, wherein
the parsing module is configured to, when a UE accesses a WEB page through a browser, parse a received Hypertext Markup Language (HTML) text, and typeset the WEB page in manner of a default picture according to a result of the parsing;
the calculating and acquiring module is in charge of calculating a visual area of the WEB page and acquiring a control within the visual area; and
the determining and drawing module is in charge of drawing the visual area after determining that the control within the visual area includes an image control and each image control within the visual area has obtained a corresponding picture. Specifically, the determining and drawing module determines whether there is an image control within the visual area; if it is determined that there is an image control within the visual area, the determining and drawing module acquires a picture corresponding to the image control existing within the visual area, adds the picture into the image control corresponding to the picture, and re-typesets the WEB page until each image control existing within the visual area has obtained a corresponding picture, and then the determining and drawing module draws the visual area; or if it is determined that there is no image control within the visual area, the determining and drawing module draws the visual area directly.

The specific implementation of the device according to an embodiment of the disclosure is as elaborated in the aforementioned method, and therefore is not described here repeatedly.

To sum up, embodiments of the disclosure provide a method and device for displaying a picture on a browser of a UE as required. The method and the device are illustrated taking the example of just a mobile phone. However, any one skilled in the art should understand that the embodiments of the disclosure can also be applicable to any other UE that can serve to access a WEB page but cannot display the WEB page in a full screen, with the same principle. The browser according to the embodiments of the disclosure merely downloads any picture of a WEB page within a scope of a screen, and if a user browses only a portion of the WEB page, then time waiting for displaying the WEB page and consumed data flow are much less than those in a traditional manner. Furthermore, as the WEB page is being moved, any picture falls within the scope of the screen will be downloaded and displayed automatically without the need for user intervention of the whole process.

The above are only preferable embodiments of the present disclosure, and are not intended to limit the scope of protection of the present disclosure. Any changes or substitutions easily thought of by those skilled in the art within the technical scope disclosed by the present disclosure shall fall within the scope of protection of the present disclosure. Therefore, the scope of protection of the present disclosure should be defined as the scope of protection of the claims.

## Claims

1. A method for displaying a picture on a browser of a User Equipment (UE) as required, comprising:
when a UE accesses a WEB page through a browser, parsing, by the browser, a received Hypertext Markup Language (HTML) text, and typesetting, by the browser, the WEB page in manner of a default picture according to a result of the parsing;
calculating a visual area of the WEB page and acquiring a control within the visual area; and
drawing the visual area after it is determined that the control within the visual area comprises an image control and each image control within the visual area has obtained a corresponding picture.

2. The method according to claim 1, further comprising:
after the WEB page is moved, re-calculating the visual area of the WEB page and acquiring a control within the visual area; and
drawing the visual area after it is determined that the control within the visual area comprises an image control and each image control within the visual area has obtained a corresponding picture.

3. The method according to claim 1 or 2, wherein the step of drawing the visual area after it is determined that the control within the visual area comprises an image control and each image control within the visual area has obtained a corresponding picture comprises:
determining whether there is an image control within the visual area; if it is determined that there is an image control within the visual area, acquiring a picture corresponding to the image control within the visual area, adding the picture into the image control corresponding to the picture, and re-typesetting the WEB page until each image control within the visual area has obtained a corresponding picture, and then drawing the visual area; or if it is determined that there is no image control within the visual area, drawing the visual area.

4. A device for displaying a picture on a browser of a User Equipment (UE) as required, comprising: a parsing module, a calculating and acquiring module, and a determining and drawing module, wherein
the parsing module is configured to, when a UE accesses a WEB page through a browser, parse a received Hypertext Markup Language (HTML) text, and typeset the WEB page in manner of a default picture according to a result of the parsing;
the calculating and acquiring module is configured to calculate a visual area of the WEB page and acquire a control within the visual area; and
the determining and drawing module is configured to draw the visual area after determining that the control within the visual area comprises an image control and each image control within the visual area has obtained a corresponding picture.

5. The device according to claim 4, wherein the determining and drawing module is configured to: determine whether there is an image control within the visual area; if it is determined that there is an image control within the visual area, acquire a picture corresponding to the image control existing within the visual area, add the picture into the image control corresponding to the picture, and re-typeset the WEB page until each image control existing within the visual area has obtained a corresponding picture, and then draw the visual area; or if it is determined that there is no image control within the visual area, draw the visual area.
